# FASCICULE DE BREVET EUROPEEN

(11) **EP 1 539 572 B1**
(45) Date de publication et mention de la délivrance du brevet: **11.01.2006**
(21) Numéro de dépôt: 03769569.9
(22) Date de dépôt: 04.09.2003
(51) Int. Cl.: B64D 23/00, A63G 31/00

(54) **SIMULATEUR DE VOL EN CHUTE LIBRE**
FREIFALLSIMULATOR
FREE FALL SIMULATOR

(30) Priorité: 04.09.2002 FR 0210916
(43) Date de publication de la demande: 15.06.2005
(73) Titulaire: Immonel, 75016 Paris (FR)
(72) Inventeur: MOINEL DELALANDE, Emmanuel, F-75017 Paris (FR)
(74) Mandataire: Ahner, Francis
(86) Numéro de dépôt international: PCT/FR2003/002645
(87) Numéro de publication internationale: WO 2004/022427

(56) Documents cités:
- FR-A- 2 659 620
- GB-A- 2 062 557
- GB-A- 2 094 162
- US-A- 4 578 037
- US-B1- 6 315 672

## Description

La présente invention concerne un simulateur de vol en chute libre, c'est-à-dire une installation destinée à maintenir en équilibre une personne en position de chute libre dans un flux contrôlé d'air ascendant qui traverse une chambre d'évolution.

Un tel type de simulateur de vol en chute libre a été conçu à des fins multiples, d'apprentissage, de formation, d'entraînement de parachutistes ou de compétiteurs confirmés, voire même trouve son application dans le cadre de parcs d'attractions et de loisirs. Il est clair qu'un tel type de simulateur de vol en chute libre permet d'éviter tous les problèmes de coûts et d'aléas météorologiques liés à l'obligation de procéder normalement à un largage en altitude à partir d'un avion.

Un tel simulateur est connu de FR-A-2659620.

La présente invention a donc eu pour but de mettre au point un simulateur de vol en chute libre qui permette de générer un flux d'air ascendant à vitesse décroissante. Un tel flux d'air doit être le plus homogène possible pour permettre à tout utilisateur, quels que soient son poids et sa corpulence, de travailler ses positions d'équilibre et figures de chute libre à différentes hauteurs d'équilibre. Pour permettre à l'utilisateur de s'entraîner efficacement à faire varier l'attitude et l'orientation de son corps pour déterminer la vitesse et la direction du mouvement de sa chute, il est essentiel de générer un flux d'air ascendant le plus homogène possible au sein de la chambre d'évolution. Une telle installation doit bien sûr également répondre à un certain nombre d'autres contraintes de respect de l'environnement, et plus particulièrement à des contraintes d'insonorisation.

C'est pourquoi la présente invention se rapporte à un simulateur de vol en chute libre qui est caractérisé en ce qu'il comporte :
➢ une chambre inférieure de compression :
   ■ au voisinage de la périphérie inférieure de laquelle débouchent les sorties d'une pluralité de ventilateurs agencés selon une configuration centripète, et
   ■ à la partie supérieure rétrécie de laquelle se trouve agencée une grille de compression ;
➢ une chambre cylindroïde définissant un espace d'évolution, qui est située immédiatement au-dessus de la chambre de compression, et qui est conçue pour être traversée par un flux homogène d'air ascensionnel présentant un gradient de vitesses régulièrement décroissantes de bas en haut ; et
➢ une superstructure généralement cylindrique qui enveloppe au moins la chambre d'évolution du simulateur, qui se termine à sa partie supérieure par un dôme coiffant ladite chambre d'évolution du simulateur, et qui est agencée pour favoriser une circulation de l'air quittant la chambre d'évolution, vers le bas en direction des entrées de ventilateurs.

Conformément à la présente invention, la surface intérieure de la chambre de compression doit être conformée pour générer un flux d'air homogène, indispensable pour assurer la stabilité de l'opérateur dans la chambre d'évolution.

Un certain nombre de caractéristiques particulières relatives à la conception de cette chambre de compression apparaîtront à la lecture de la description détaillée faite ci-après, notamment en référence aux dessins annexés illustrant schématiquement une telle installation de simulation de vol en chute libre.

D'autres caractéristiques relatives à la chambre d'évolution du simulateur apparaîtront également à la lecture de cette description détaillée faite ci-après.

L'installation de simulation de vol en chute libre selon l'invention comprend une partie en superstructure 10 comprenant un dôme 12 protégeant le cylindre d'évolution proprement dit 14.

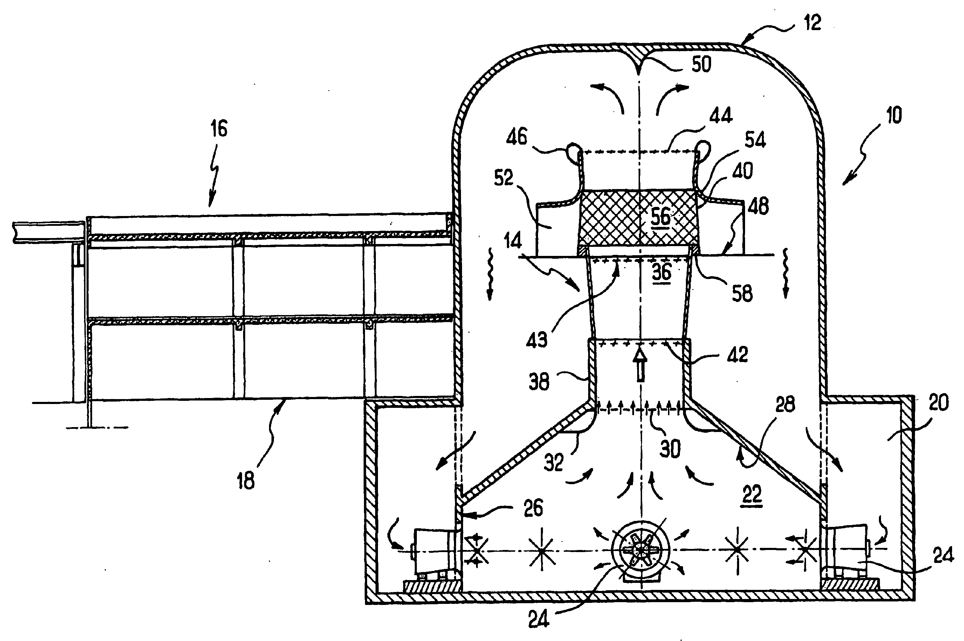

Sur le dessin annexé, la partie en superstructure se prolonge, indifféremment d'un côté ou de l'autre du dôme 10, par une représentation schématique de bâtiments annexes 16 destinés à abriter des vestiaires, sanitaires et couloirs d'accès à la chambre d'évolution 14. Sur le dessin annexé, la ligne 18 schématise approximativement le niveau du sol.

En dessous de ce niveau 18, l'installation comporte une partie en infrastructure essentiellement composée d'un local technique annulaire 20 assurant l'amenée d'air, ainsi que de la chambre inférieure de compression 22.

La chambre inférieure de compression 22 présente au voisinage de sa périphérie inférieure une pluralité d'ouvertures dans lesquelles débouchent les sorties de ventilateurs centrifuges 24 agencés selon une configuration centripète. Cette partie inférieure de la chambre de compression 22 est avantageusement réalisée sous une forme généralement cylindrique de révolution 26 se prolongeant vers le haut par une partie tronconique 28.

Pour générer un flux homogène d'air, à la fois dans la chambre de compression 22 et surtout ultérieurement dans le cylindre d'évolution 14, il est avantageux de disposer les ventilateurs hélicoïdes 24 avec un écartement angulaire constant.

Dans la pratique, il s'est avéré satisfaisant d'utiliser douze ventilateurs centrifuges implantés dans le local technique annulaire 20 avec un écartement angulaire constant.

La chambre de compression 22 présente dans le mode de réalisation illustré, un rayon de 7,75 m et une hauteur de 7,5 m. La forme de cette chambre permet notamment d'engendrer des courbes de vitesses d'air les plus homogènes possible.

Il s'est ainsi avéré intéressant, pour éviter le décollement de la veine d'air le long de la paroi intérieure de la partie tronconique 28 voisine de la grille de compression 30 agencée à la partie supérieure rétrécie de la partie tronconique 28, d'équiper la paroi intérieure d'un coude annulaire 32 faisant saillie vers l'intérieur de la chambre de compression 22. Dans le mode de réalisation représenté, le coude annulaire présente un rayon de 1 m. Une telle caractéristique de profil de la paroi interne de la chambre de compression 22, permet de canaliser le flux d'air et de transformer efficacement la pression statique de la chambre en pression dynamique sans engendrer le décollement de la veine d'air après passage du coude annulaire 32. Ce dernier présente un rayon d'environ 1 m et se trouve de préférence réalisé sous la forme d'une pièce en tôle galvanisée qui s'adapte parfaitement à la structure des parois en béton de la chambre inférieure de compression.

Les ventilateurs disposés dans le local peuvent être constitués par des ventilateurs centrifuges du type comportant un pavillon d'aspiration grillagé, qui permettra d'assurer l'amenée d'air cheminant à travers des ouvertures ménagées au pourtour du local technique annulaire 20. Dans les conditions de réalisation de l'installation représentée, la vitesse de passage de l'air à cette section annulaire ainsi qu'à l'arrivée sur le ventilateur, restera inférieure de préférence à 7 m/s.

Avantageusement les ventilateurs hélicoïdes seront montés sur un socle et des plots anti-vibration. Les caractéristiques des ventilateurs utilisés avec succès dans la pratique peuvent par exemple être les suivantes :
débit d'air unitaire : 66 m³/s ;
pression du ventilateur : 2 260 Pa ;

La vitesse de sortie d'air de ce type de ventilateurs doit avantageusement se situer à environ 40 m/s.

La grille de compression 30 implantée après le coude annulaire 32 a principalement pour fonction de maintenir la pression de la chambre inférieure de compression 22 et de répartir de la manière la plus uniforme possible, les vitesses de l'air à la sortie de cette chambre de compression.

Avantageusement, la grille de compression 30 qui est montée à la partie supérieure de la chambre inférieure de compression 22, est déterminée pour engendrer une perte de charge d'environ 150 Pa. Dans la pratique, une grille ayant une ouverture de maille de 500 mm x 500 mm et par exemple un diamètre de fil d'environ 2 mm a donné entière satisfaction.

Pour compléter la description de la partie inférieure en infrastructure de l'installation selon l'invention, il y a lieu de mentionner qu'un renouvellement d'air doit avoir lieu en permanence 24, et ceci principalement pour combattre la surchauffe de l'air due au fonctionnement des ventilateurs et pour apporter régulièrement de l'air hygiénique. A cet effet, dans un mode de réalisation particulier, la partie supérieure du dôme 12 présente au moins une prise d'air frais munie d'un piège à son. Par ailleurs, l'extraction d'air est assurée mécaniquement par une pluralité de ventilateurs d'extraction qui permettent en outre de contrôler la température de l'ensemble du simulateur de vol.

Des pièges à son peuvent avantageusement être également prévus à la sortie des ventilateurs d'extraction.

Il conviendra toujours de prévoir dans cette installation, des prises d'air neuf et de rejet agencées dans un mode de fonctionnement opposé.

La grille de compression 30 est surmontée par une chambre cylindroïde 36 définissant un espace d'évolution qui est situé immédiatement au-dessus de la chambre de compression 22. Cette chambre cylindroïde 36 est conçue pour être traversée par un flux d'air homogène ascensionnel présentant un gradient de vitesses régulièrement décroissant de bas en haut.

Avantageusement, cette chambre cylindroïde d'évolution 36 comprend une partie basse généralement cylindrique 38 qui se prolonge vers le haut par une partie conique divergente 40.

Avantageusement, l'angle formé par les parois de la partie conique divergente 40 avec la verticale est inférieur à environ 6°.

Dans le mode de réalisation schématisé, la hauteur totale d'évolution est de l'ordre de 7 m. Cette hauteur totale d'évolution s'étend entre les deux filets de sécurité 42 et 44 équipant respectivement les parties basse et haute de la chambre cylindroïde d'évolution 36, lorsque le filet intermédiaire 43 de confort est démonté.

La partie basse de cette chambre cylindroïde d'évolution 36 est composée; dans l'installation illustrée sur la figure annexée, d'un cylindre de 3,80 m de diamètre sur une hauteur de 2m. La partie conique divergente 40 présente une hauteur de 8,50 m avec un angle de divergence par rapport à la verticale d'environ 3,6°. Dans la pratique, un tel angle a permis d'éviter les effets de paroi et le décollement de la veine d'air le long de la chambre cylindroïde d'évolution 36.

On observera que dans de telles conditions, le filet bas de sécurité 42, implanté à environ 1,5 m de la grille de compression 30, au-dessus de cette dernière, conduit à une perte de charge du couple grille de compression + filet de protection, de l'ordre de 400 Pa.

Ainsi, les utilisateurs de l'installation pourront évoluer sur une hauteur d'environ 7 m entre le filet bas de protection 42 et la limite de la portance se situant à environ 50 cm en dessous du filet de protection supérieur 44.

De manière à faciliter l'écoulement d'air à la sortie de la chambre cylindroïde 36 et à permettre ainsi son recyclage correct, le bord libre supérieur de la chambre cylindroïde 36 est muni d'une collerette périphérique 46 qui pourra également être réalisée sous la forme d'une pièce de transformation en tôle galvanisée. Bien entendu, le coude annulaire 32 et la collerette périphérique 46 réalisés par exemple en tôle galvanisée, ainsi que les filets de sécurité 42 et 44 et la grille de compression 30 seront mis en place sans attache de fixation susceptible de perturber l'écoulement du fluide.

Dans le mode de réalisation illustré, les vitesses sont réparties dans la chambre cylindroïde d'évolution 36 de la manière suivante :
- partie basse :: environ 70 m/s
- partie médiane :: environ 50 m/s
- partie haute :: voisine de la vitesse limite de portance d'environ 45 m/s.

Il convient d'observer que la vitesse de l'air généré à la partie basse, à savoir environ 70 m/s, permet d'effectuer la plupart des figures de chute libre par des opérateurs expérimentés. Au-delà de cette zone, la vitesse sera décroissante pour atteindre la vitesse limite de portance au niveau de la section supérieure de cette chambre 36. La section intermédiaire correspond en fait à la vitesse d'utilisation la plus courante pour des opérateurs moyennement expérimentés. Cette vitesse d'environ 50 m/s (180 Km/h) sera en particulier respectée au point haut de la plate forme d'accès 48 au cylindre qui se situe au niveau référencé 48 sur le dessin annexé.

A ce niveau de la chambre cylindroïde, l'invention présente un certain nombre de caractéristiques non représentées plus en détail, destinées notamment à assurer l'accès de la chambre d'évolution.

Ainsi, la chambre cylindroïde d'évolution est équipée d'un filet additionnel de confort 43, fixé à sa périphérie de façon amovible.

Selon une autre caractéristique de l'invention, la paroi de la partie médiane de la chambre cylindroïde d'évolution présente au moins une ouverture débouchant dans une chambre d'accès fermée 52 sur le dôme et définissant une plate forme d'accès 48, affectant de préférence une forme cylindrique de révolution.

Selon une autre caractéristique de l'invention, la partie supérieure de la chambre d'accès 52 présente un profil de raccordement courbe 54, avec une concavité dirigée vers l'intérieur pour favoriser la circulation des flux d'air.

Selon une autre caractéristique de l'invention, le filet additionnel de confort 43, est agencé sensiblement au niveau de ladite plate forme d'accès 48.

Selon une autre caractéristique de l'invention, au moins un filet périphérique 56 permettant aux opérateurs de rester dans le flux d'air est tendu sur ladite ouverture dans le prolongement de la paroi de la partie conique divergente 40.

Selon une autre caractéristique de l'invention, deux filets périphériques 56 se superposent au moins partiellement de façon à autoriser l'accès des opérateurs à la chambre d'évolution.

Selon une autre caractéristique de l'invention, la paroi intérieure de la chambre conique 40 comporte une margelle d'envol et d'amortissement 58 dont la face intérieure s'étend dans le prolongement de ladite paroi intérieure de la chambre conique 40.

L'homogénéité du flux d'air ascendant se déplaçant dans la chambre cylindroïde 36 est également favorisée par une bonne recirculation du flux d'air à l'intérieur de la superstructure et infrastructure de l'installation, en traversant la chambre annulaire 20. Cette circulation d'air a été schématisée par diverses flèches sur le dessin annexé. De manière à favoriser cette circulation d'air, la superstructure est équipée d'une saillie centrale profilée de révolution 50 qui est centrée sur l'axe de révolution de la chambre cylindroïde d'évolution 36. Avantageusement, cette saillie centrale de révolution 50 affecte la forme générale d'un cône dont la surface latérale est concave avec une concavité dirigée vers l'intérieur de ladite saillie. Pareille disposition permet de favoriser les changements de direction de l'air à la sortie de la chambre cylindroïde 36.

Il est bien entendu que le simulateur décrit précédemment peut en outre comporter un certain nombre de modifications et/ou d'adjonctions sans pour autant sortir du cadre de la présente invention.

C'est ainsi qu'il est possible de prévoir la présence d'orifices et/ou de dispositifs de ventilation réduisant la température interne de l'installation.

La présence d'extracteurs abaissant le bruit à l'intérieur et à l'extérieur de l'installation peut également être envisagée pour certaines conditions d'utilisation.

La présence éventuelle de grilles additionnelles de diffusion et/ou de stabilisation du flux d'air, pourra également être envisagée dans le cadre de certaines applications particulières du simulateur selon l'invention.

## Revendications

1. Simulateur de vol en chute libre, comportant :
. une chambre inférieure de compression (22):
- au voisinage de la périphérie inférieure de laquelle débouchent les sorties d'une pluralité de ventilateurs (24) agencés selon une configuration centripète, et
- à la partie supérieure rétrécie de laquelle se trouve agencée une grille de compression (30) ;
. une chambre cylindroïde (36) définissant un espace d'évolution, qui est située immédiatement au-dessus de la chambre de compression (22), et qui est conçue pour être traversée par un flux homogène d'air ascensionnel présentant un gradient de vitesses régulièrement décroissantes de bas en haut ; et
. une superstructure généralement cylindrique qui enveloppe au moins la chambre d'évolution (14) du simulateur, qui se termine à sa partie supérieure par un dôme (12) coiffant ladite chambre d'évolution du simulateur, et qui est agencée pour favoriser une circulation de l'air quittant la chambre d'évolution, vers le bas en direction des entrées de ventilateurs.

2. Simulateur selon la revendication 1, **caractérisé en ce que** la surface intérieure de la chambre de compression est conformée pour générer un flux homogène d'air afin d'assurer la stabilité de l'opérateur dans la chambre d'évolution.

3. Simulateur selon l'une des revendications 1 et 2, **caractérisé en ce que** la chambre inférieure de compression (22) comprend une partie basse généralement cylindrique de révolution (26) se prolongeant vers le haut par une partie tronconique (28).

4. Simulateur selon la revendication 3, **caractérisé en ce que**, pour éviter le décollement de la veine d'air le long de la paroi intérieure de la partie tronconique voisine de la grille de compression, ladite paroi intérieure est équipée d'un coude annulaire (32) faisant saillie vers l'intérieur de la chambre de compression (22).

5. Simulateur selon l'une des revendications 1 à 4, **caractérisé en ce que** lesdits ventilateurs (24) débouchent sur la paroi de la partie basse généralement cylindrique, avec un écartement angulaire constant.

6. Simulateur selon l'une des revendications 1 à 5, **caractérisé en ce que** la grille de compression (30) montée à la partie supérieure de la chambre inférieure de compression (22) est choisie pour engendrer une perte de charge d'environ 150 Pa, en particulier sous la forme d'une grille ayant une ouverture de maille de 500 mm x 500 mm.

7. Simulateur selon l'une des revendications 1 à 6, **caractérisé en ce que** la vitesse d'arrivée d'air aux ventilateurs est de l'ordre de 7 m/s et la vitesse de sortie d'air des ventilateurs est de l'ordre de 40 m/s.

8. Simulateur selon l'une des revendication 1 à 7, **caractérisé en ce que** la chambre cylindroïde d'évolution (36) comprend une partie basse généralement cylindrique (38) qui se prolonge vers le haut par une partie généralement conique divergente (40).

9. Simulateur selon la revendication 8, **caractérisé en ce que** l'angle formé par les parois de la partie généralement conique divergente de la chambre cylindroïde d'évolution avec la verticale est inférieure à environ 6°.

10. Simulateur selon l'une des revendications 1 à 9, **caractérisé en ce que** la chambre cylindroïde d'évolution est équipée à chacune de ses parties basse et haute d'un filet de sécurité (42,44).

11. Simulateur selon l'une des revendications 1 à 10, **caractérisé en ce que** la chambre cylindroïde d'évolution est équipée d'un filet additionnel de confort (43) fixé à sa périphérie de façon amovible.

12. Simulateur selon l'une des revendications 1 à 11, **caractérisé en ce que** la paroi de la partie médiane de la chambre cylindroïde d'évolution présente au moins une ouverture débouchant dans une chambre d'accès fermée (52) sur le dôme et définissant une plate forme d'accès (48).

13. Simulateur selon la revendication 12, **caractérisé en ce que** la chambre d'accès (52) affecte une forme cylindrique de révolution.

14. Simulateur selon l'une des revendications 12 et 13, **caractérisé en ce que** la partie supérieure de la chambre d'accès (52) présente un profil de raccordement courbe (54) avec une concavité dirigée vers l'intérieur pour favoriser la circulation des flux d'air.

15. Simulateur selon l'une des revendications 12 à 14, **caractérisé en ce que** le filet additionnel de confort (43) est agencé sensiblement au niveau de ladite plate forme d'accès (48).

16. Simulateur selon l'une des revendications 12 à 15, **caractérisé en ce qu'**au moins un filet périphérique (56) permettant aux opérateurs de rester dans le flux d'air est tendu sur ladite ouverture dans le prolongement de la paroi de la partie conique divergente (40).

17. Simulateur selon la revendication 16, **caractérisé en ce qu'**il comporte deux filets périphériques (56) se superposant au moins partiellement de façon à autoriser l'accès des opérateurs à la chambre d'évolution.

18. Simulateur selon l'une des revendications 1 à 17, **caractérisé en ce que** la paroi intérieure de la chambre conique (40) comporte une margelle d'envol et d'amortissement (58) dont la face intérieure s'étend dans le prolongement de ladite paroi intérieure de la chambre conique (40).

19. Simulateur selon l'une des revendications 1 à 18, **caractérisé en ce que** la chambre cylindroïde d'évolution est munie à son bord libre supérieur d'une collerette périphérique (46) destinée à faciliter l'écoulement d'air.

20. Simulateur selon l'une des revendications 1 à 19, **caractérisé en ce que** les vitesses sont réparties dans la chambre cylindroïde d'évolution de la manière suivante :
partie basse : environ 70 m/s
partie médiane : environ 50 m/s
partie haute : voisine de la vitesse limite de portance d'environ 45 m/s.

21. Simulateur selon l'une des revendications 1 à 20, **caractérisé en ce que** la grille de compression et le filet de sécurité ménagé à la partie basse de la chambre cylindroïde d'évolution sont choisis pour déterminer une perte de charge totale d'environ 400 Pa.

22. Simulateur selon l'une des revendications 1 à 21, **caractérisé en ce que** la surface intérieure du dôme de ladite superstructure est équipée d'une saillie centrale profilée de révolution (50) pour favoriser la circulation d'air, ladite saillie étant centrée sur l'axe de révolution de la chambre cylindroïde d'évolution.

23. Simulateur selon la revendication 22, **caractérisé en ce que** ladite saillie centrale de révolution affecte la forme générale d'un cône dont la surface latérale est concave avec une concavité dirigée vers l'intérieur de ladite saillie.

## Patentansprüche

1. Freifallsimulator mit:
- einer unteren Kompressionskammer (22):
nahe deren unterem Rand die Ausgänge mehrerer Ventilatoren (24) münden, die gemäß einer zentripetalen Aufstellung angeordnet sind, und
an deren verengtem oberem Teil sich ein Kompressionsgitter (30) befindet;
- einer einen Bewegungsraum definierenden zylindroiden Kammer (36), die unmittelbar oberhalb der Kompressionskammer (22) angeordnet ist und von einem aufsteigenden homogenen Luftstrom durchquert werden soll, der einen Geschwindigkeitsgradienten hat, der von unten nach oben gleichmäßig abnimmt; und
- einer allgemein zylindrischen Superstruktur, welche zumindest die Bewegungskammer (14) des Simulators umgibt, am oberen Ende in einer die Bewegungskammer des Simulators überdeckenden Kuppel (12) endet und so angeordnet ist, daß sie eine Zirkulation der aus der Bewegungskammer austretenden Luft nach unten in Richtung der Ventilatoreingänge begünstigt.

2. Simulator nach Anspruch 1, **dadurch gekennzeichnet, daß** die innere Oberfläche der Kompressionskammer so ausgebildet ist, daß sie einen homogenen Luftstrom erzeugt, um die Stabilität des Benutzers in der Bewegungskammer sicherzustellen.

3. Simulator nach einem der Ansprüche 1 und 2, **dadurch gekennzeichnet, daß** die untere Kompressionskammer (22) einen unteren allgemein zylindrischen rotationssymmetrischen Teil (26) aufweist, der sich nach oben in einem kegelstumpfförmigen Teil (28) fortsetzt.

4. Simulator nach Anspruch 3, **dadurch gekennzeichnet, daß**, um das Abreißen des Luftstroms entlang der Innenwand des kegelstumpfförmigen Teils in der Nähe des Kompressionsgitters zu verhindern, die Innenwand mit einer ringförmigen Ausbuchtung (32) versehen ist, das ins Innere der Kompressionskammer (22) vorspringt.

5. Simulator nach einem der Ansprüche 1 bis 4, **dadurch gekennzeichnet, daß** die Ventilatoren (24) in einem konstanten Winkelabstand in die Wand des unteren allgemein zylindrischen Teils einmünden.

6. Simulator nach einem der Ansprüche 1 bis 5, **dadurch gekennzeichnet, daß** das an dem oberen Teil der unteren Kompressionskammer (22) angebrachte Kompressionsgitter (30) gewählt ist, um einen Druckverlust von ungefähr 150 Pa zu erzeugen, insbesondere in Form eines Gitters mit einer Maschenöffnung von 500 mm x 500 mm.

7. Simulator nach einem der Ansprüche 1 bis 6, **dadurch gekennzeichnet, daß** die Ankunftsgeschwindigkeit der Luft an den Ventilatoren in der Größenordnung von 7 m/s ist und die Austrittsgeschwindigkeit der Luft aus den Ventilatoren in der Größenordnung von 40 m/s ist.

8. Simulator nach einem der Ansprüche 1 bis 7, **dadurch gekennzeichnet, daß** die zylindroide Bewegungskammer (36) einen unteren allgemein zylindrischen Teil (38) aufweist, der sich nach oben in einem allgemein konischen, breiter werdenden Teil (40) fortsetzt.

9. Simulator nach Anspruch 8, **dadurch gekennzeichnet, daß** der Winkel, den die Wände des allgemein konischen, breiter werdenden Teils der zylindroiden Bewegungskammer mit der Vertikalen bilden, kleiner als ungefähr 6° ist.

10. Simulator nach einem der Ansprüche 1 bis 9, **dadurch gekennzeichnet, daß** die zylindroide Bewegungskammer an ihrem unteren und oberen Teil jeweils mit einem Sicherheitsnetz (42,44) ausgestattet ist.

11. Simulator nach einem der Ansprüche 1 bis 10, **dadurch gekennzeichnet, daß** die zylindroide Bewegungskammer mit einem zusätzlichen Komfortnetz (43) ausgestattet ist, das auf abnehmbare Weise an ihrem Umfang befestigt ist.

12. Simulator nach einem der Ansprüche 1 bis 11, **dadurch gekennzeichnet, daß** die Wand des mittleren Teils der zylindroiden Bewegungskammer mindestens eine Öffnung aufweist, die in eine Zugangskammer (52) führt, die zur Kuppel hin geschlossen ist und eine Zugangsplattform (48) definiert.

13. Simulator nach Anspruch 12, **dadurch gekennzeichnet, daß** die Zugangskammer (52) eine zylindrische Rotationsform aufweist.

14. Simulator nach einem der Ansprüche 12 und 13, **dadurch gekennzeichnet, daß** der obere Teil der Zugangskammer (52) ein bogenförmiges Verbindungsprofil (54) mit einer nach innen gerichteten Konkavität aufweist, um die Zirkulation der Luftströme zu begünstigen.

15. Simulator nach einem der Ansprüche 12 bis 14, **dadurch gekennzeichnet, daß** das zusätzliche Komfortnetz (43) im wesentlichen in Höhe der Zugangsplattform (48) angeordnet ist.

16. Simulator nach einem der Ansprüche 12 bis 15, **dadurch gekennzeichnet, daß** mindestens ein Umfangsnetz (56), das den Benutzern erlaubt, in dem Luftstrom zu bleiben, über die Öffnung in der Verlängerung der Wand des konischen verbreiternden Teils (40) gespannt ist.

17. Simulator nach Anspruch 16, **dadurch gekennzeichnet, daß** er zwei Umfangsnetze (56) aufweist, die sich zumindest teilweise überlappen, um so den Zutritt der Benutzer in die Bewegungskammer zu erlauben.

18. Simulator nach einem der Ansprüche 1 bis 17, **dadurch gekennzeichnet, daß** die Innenwand der konischen Kammer (40) einen Abflug- und Ausschwingungsrand (58) aufweist, dessen Innenfläche sich in der Verlängerung der Innenwand der konischen Kammer (40) erstreckt.

19. Simulator nach einem der Ansprüche 1 bis 18, **dadurch gekennzeichnet, daß** die zylindroide Bewegungskammer an ihrem freien oberen Rand mit einem Umfangskragen (46) versehen ist, der vorgesehen ist, um das Abströmen der Luft zu erleichtern.

20. Simulator nach einem der Ansprüche 1 bis 19, **dadurch gekennzeichnet, daß** die Geschwindigkeiten in der zylindroiden Bewegungskammer auf folgende Weise verteilt sind:
unterer Teil: ungefähr 70 m/s
mittlerer Teil: ungefähr 50 m/s
oberer Teil: nahe an der Auftriebsgeschwindigkeitsgrenze von ungefähr 45 m/s.

21. Simulator nach einem der Ansprüche 1 bis 20, **dadurch gekennzeichnet, daß** das Kompressionsgitter und das in dem unteren Teil der zylindroiden Bewegungskammer angebrachte Sicherheitsnetz gewählt sind, um einen Gesamtdruckverlust von ungefähr 400 Pa zu bewirken.

22. Simulator nach einem der Ansprüche 1 bis 21, **dadurch gekennzeichnet, daß** die Innenfläche der Kuppel der Superstruktur mit einem zentralen profilierten Rotationsvorsprung (50) versehen ist, um die Luftzirkulation zu begünstigen, wobei der Vorsprung um die Rotationsachse der zylindroiden Bewegungskammer zentriert angeordnet ist.

23. Simulator nach Anspruch 22, **dadurch gekennzeichnet, daß** der zentrale Rotationsvorsprung die allgemeine Form eines Konus aufweist, dessen Seitenfläche konkav ist, mit einer ins Innere des Vorsprungs gerichteten Konkavität.

## Claims

1. Free fall simulator, comprising:
- a lower compression chamber (22):
- in the vicinity of whose lower periphery there open the outlets of a plurality of fans (24) arranged in a centripetal configuration, and
- in whose upper tapered part there is placed a compression grid (30);
- a cylindroid chamber (36) delimiting a manoevre space, which is located immediately above the compression chamber (22), and which is designed to be traversed by a homogeneous flow of rising air having a velocity gradient decreasing regularly from the bottom to the top; and
- a generally cylindrical superstructure which encloses at least the manoevre chamber (14) of the simulator, which terminates in its upper part in a dome (12) which covers said manoevre chamber of the simulator, and which is arranged to promote a downward circulation of the air leaving the manoevre chamber towards the fan inlets.

2. Simulator according to Claim 1, **characterized in that** the inner surface of the compression chamber is shaped to generate a homogeneous air flow to ensure the stability of the operator in the manoevre chamber.

3. Simulator according to either one of Claims 1 and 2, **characterized in that** the lower compression chamber (22) comprises a generally axisymmetric cylindrical bottom part (26) extended upward by a frustoconical part (28).

4. Simulator according to Claim 3, **characterized in that**, in order to prevent the separation of the air stream along the inner wall of the frustoconical part adjacent to the compression grid, said inner wall is provided with an annular bend (32) projecting towards the interior of the compression chamber (22).

5. Simulator according to any one of Claims 1 to 4, **characterized in that** said fans (24) open in the wall of the generally cylindrical bottom part, with a constant angular spacing.

6. Simulator according to any one of Claims 1 to 5, **characterized in that** the compression grid (30) mounted in the upper part of the lower compression chamber (22) is chosen to generate a pressure drop of approximately 150 Pa, in particular in the form of a grid having a mesh size of 500 mm x 500 mm.

7. Simulator according to any one of Claims 1 to 6, **characterized in that** the air speed at the inlet of the fans is of the order of 7 m/s and the air speed at the outlet of the fans is of the order of 40 m/s.

8. Simulator according to any one of Claims 1 to 7, **characterized in that** the cylindroid manoevre chamber (36) comprises a generally cylindrical bottom part (38) which is extended upward by a generally diverging conical part (40).

9. Simulator according to Claim 8, **characterized in that** the angle formed by the walls of the generally diverging conical part of the cylindroid manoevre chamber with the vertical is less than approximately 6°.

10. Simulator according to any one of Claims 1 to 9, **characterized in that** the cylindroid manoevre chamber is fitted with a safety net (42, 44) in each of its bottom and top parts.

11. Simulator according to any of Claims 1 to 10, **characterized in that** the cylindroid manoevre chamber is provided with an additional comfort net (43) fixed removably to its periphery.

12. Simulator according to any one of Claims 1 to 11, **characterized in that** the wall of the middle part of the cylindroid manoevre chamber has at least one aperture opening into a closed access chamber (52) in the dome and delimiting an access platform (48).

13. Simulator according to Claim 12, **characterized in that** the access chamber (52) takes the form of a cylinder of revolution.

14. Simulator according to either of Claims 12 and 13, **characterized in that** the upper part of the access chamber (52) has a curved connecting profile (54), with an inward concavity to promote the circulation of the air flows.

15. Simulator according to any one of Claims 12 to 14, **characterized in that** the additional comfort net (43) is placed substantially level will said access platform (48).

16. Simulator according to any one of Claims 12 to 15, **characterized in that** at least one peripheral net (56) allowing the operators to remain in the air flow is stretched over said aperture in the extension of the wall of the diverging conical part (40).

17. Simulator according to Claim 16, **characterized in that** it comprises two peripheral nets (56) which overlap at least partially to allow the operators to access the manoevre chamber.

18. Simulator according to any one of Claims 1 to 17, **characterized in that** the inner wall of the conical chamber (40) comprises a take-off and damping border (58) whose inner face extends in the extension of said inner wall of the conical chamber (40).

19. Simulator according to any one of Claims 1 to 18, **characterized in that** the cylindroid manoevre chamber is provided at its upper free edge with a peripheral collar (46) intended to facilitate the outflow of air.

20. Simulator according to any one of Claims 1 to 19, **characterized in that** the speeds are distributed in the cylindroid manoevre chamber as follows:
bottom part: approximately 70 m/s
middle part: approximately 50 m/s
top part: near the limit lift speed of approximately 45 m/s.

21. Simulator according to any one of Claims 1 to 20, **characterized in that** the compression grid and the safety net positioned in the bottom part of the cylindroid manoevre chamber are chosen to generate a total pressure drop of approximately 400 Pa.

22. Simulator according to any one of Claims 1 to 21, **characterized in that** the inner surface of the dome of said superstructure is provided with a profiled central axisymmetric projection (50) in order to promote the circulation of air, said projection being centred on the axis of revolution of the cylindroid manoevre chamber.

23. Simulator according to Claim 22, **characterized in that** said central axisymmetric projection takes the general form of a cone whose lateral surface is concave with its concavity directed towards the interior of said projection.
